# DEMANDE DE BREVET EUROPEEN

(11) **EP 4 471 919 A1**
(43) Date de publication de la demande: **04.12.2024**
(21) Numéro de dépôt: 23305860.1
(22) Date de dépôt: 31.05.2023
(51) Int. Cl.: H01M 10/04, H01M 10/613, H01M 10/6555, H01M 10/6557, H01M 50/209, H01M 50/291, H01M 50/293

(54) **BATTERIE**

(71) Demandeur: Automotive Cells Company SE, 33520 Bruges (FR)
(72) Inventeur: FRESNEAU, Aymeric, 33400 TALENCE (FR); MARATHE, Dimitri, 33310 LORMONT (FR); BOOS, Gwenaelle, 33320 EYSINES (FR); FAT-CHEUNG, Adrien, 33520 BRUGES (FR)
(74) Mandataire: Lavoix

(57) **Abrégé**

La batterie comporte une cuve de circulation d'un fluide caloporteur et disposés dans la cuve :
- des éléments de batterie ; et
- un panneau séparateur (16) interposé entre les éléments de batterie, le panneau séparateur (16) étant formé d'une structure en treillis délimitant une pluralité de passages interconnectés de circulation du fluide caloporteur.

Chaque panneau séparateur (16) comporte des plages (20, 22, 24) de compressibilités différentes.

## Description

La présente invention concerne une batterie, selon le préambule de la revendication 1.

Les batteries de véhicule automobile notamment comportent des éléments de batterie disposés côte à côte à l'intérieur d'une cuve empli d'un fluide caloporteur en vue du refroidissement des éléments de batterie.

Les éléments de batterie, couramment désignés par cellules, sont des éléments électrochimiques qui subissent une déformation au cours de chaque cycle de charge/décharge et de manière plus macroscopique au cours de leur durée de vie.

Il est connu de prévoir, entre les éléments de batterie, des panneaux séparateurs formés dans des matériaux compressibles permettant d'absorber la déformation des éléments de batterie disposés côte à côte.

Ces panneaux séparateurs assurent le maintien en position des éléments de batterie au sein de la cuve et ont donc une fonction de retenue mécanique. Toutefois, ils doivent être conçus pour permettre une circulation du fluide caloporteur de refroidissement de la batterie, ce qui rend leur conception complexe.

Le document US 2022 0045 388 décrit une batterie dans laquelle les éléments de batterie sont séparés par des panneaux ayant une structure lattice, c'est-à-dire qu'ils sont formés d'une structure en treillis délimitant une pluralité de passages interconnectés de circulation du fluide caloporteur.

Ces panneaux sont formés de colonnes disjointes délimitant un passage de circulation du fluide caloporteur entre elles. La structure lattice des panneaux est ajourée et permet également la circulation du fluide au travers des panneaux proprement dits.

Les panneaux séparateurs assurent toutefois un positionnement imparfait des éléments de batterie les uns par rapport aux autres et le refroidissement au sein de la batterie n'est pas optimal.

L'invention a pour but de proposer une batterie ayant un positionnement amélioré des éléments de batterie les uns par rapport aux autres et une meilleure évacuation de la chaleur.

À cet effet, l'invention a pour objet une batterie du type précité, selon la partie caractérisante de la revendication 1.

Suivant des modes particuliers de réalisation, l'invention comporte l'une ou plusieurs des caractéristiques des revendications dépendantes.

L'invention sera mieux comprise à la lecture de la description qui va suivre, donnée uniquement à titre d'exemple et faite en se référant aux dessins sur lesquels :
- [Fig.1] La figure 1 est une vue en perspective schématique d'une batterie selon l'invention ;
- [Fig.2] La figure 2 est une vue en élévation d'un panneau séparateur de la batterie de la figure 1 ;
- [Fig.3] La figure 3 est une courbe montrant les caractéristiques de compressibilité de deux plages distinctes du panneau séparateur ;

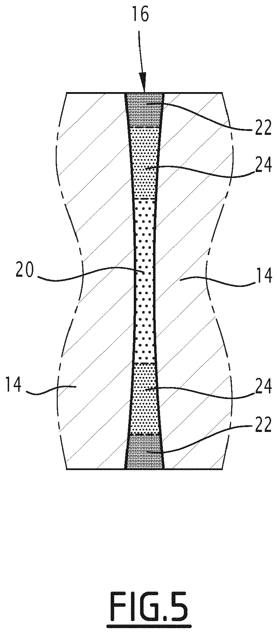

- [Fig.4] [Fig.5] Les figures 4 et 5 sont des vues en section transversale partielle de la batterie montrant un panneau séparateur entre deux éléments de batterie respectivement lorsque la batterie est neuve et lorsque la batterie est en fin de vie ;

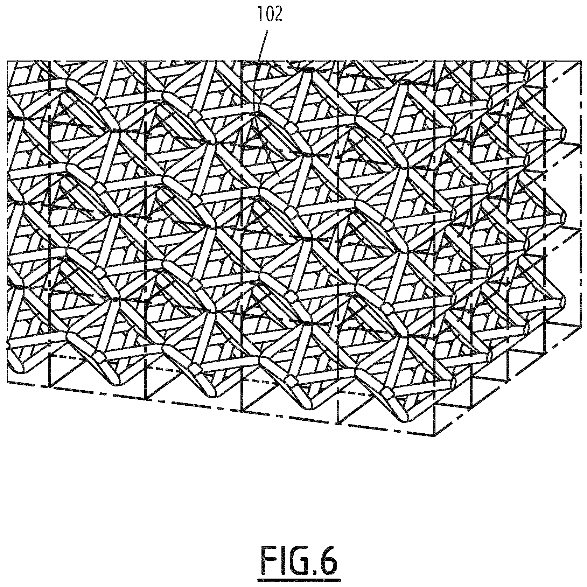

- [Fig.6] La figure 6 est une vue en perspective de la structure générale du matériau à structure lattice formant le panneau séparateur de la figure 2 ; et
- [Fig.7] [Fig.8] [Fig.9] Les figures 7, 8 et 9 sont des vues en perspective d'un motif de la structure du matériau de la figure 4 pour des zones de compressibilités différentes.

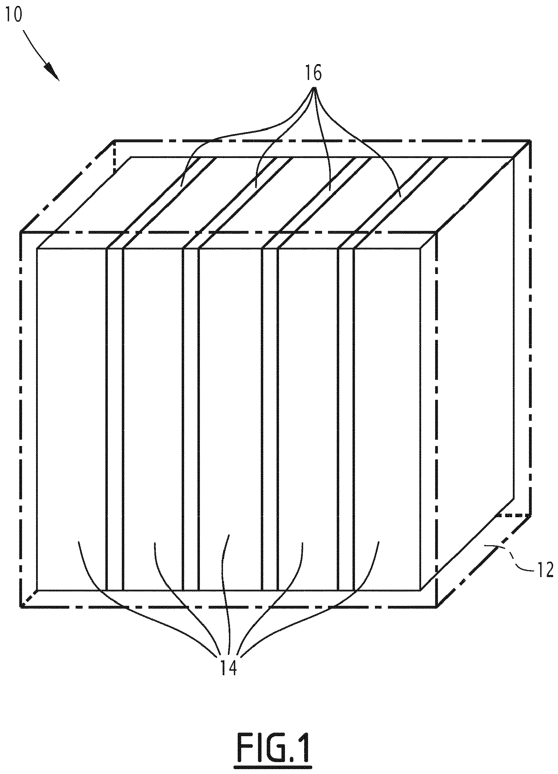

La batterie, illustrée sur la figure 1, est une batterie de véhicule automobile. Elle comporte une cuve étanche 12 dans laquelle est disposé un ensemble d'éléments de batterie 14 séparés les uns des autres par des panneaux séparateurs 16.

Les éléments de batterie 14 sont des éléments électrochimiques, comportant chacun un ensemble de cathodes et d'anodes reliées ensemble pour former les deux pôles de l'élément de batterie. Les cathodes et électrodes sont maintenues dans un bain d'électrolyte clos. Les éléments de batterie sont couramment désignés par cellules.

En variante, les éléments de batterie sont des modules, eux-mêmes chacun constitué d'un ensemble de cellules.

Les éléments de batterie ont une forme parallélépipédique et ont une longueur par exemple de 220 mm, une largeur de 110 mm et une épaisseur d'environ 20 mm.

Les éléments de batterie sont disposés côte à côte avec leur plus grande face en regard pour former un alignement d'éléments de batterie. Entre chaque paire d'éléments de batterie adjacents est disposé un panneau séparateur 16 dont la surface correspond à la surface des faces en regard des deux éléments de batterie adjacents.

L'alignement des éléments de batterie 14 est enserré à l'intérieur de la cuve 12. Les éléments de batterie sont maintenus comprimés les uns contre les autres avec interposition des panneaux séparateurs, avec une précontrainte comprise entre 0,1 et 30 bars et de préférence d'environ 1 bar.

Comme connue en soi, la cuve 12 comporte une entrée et une sortie pour la circulation d'un fluide caloporteur non représenté remplissant entièrement le volume de la cuve 12.

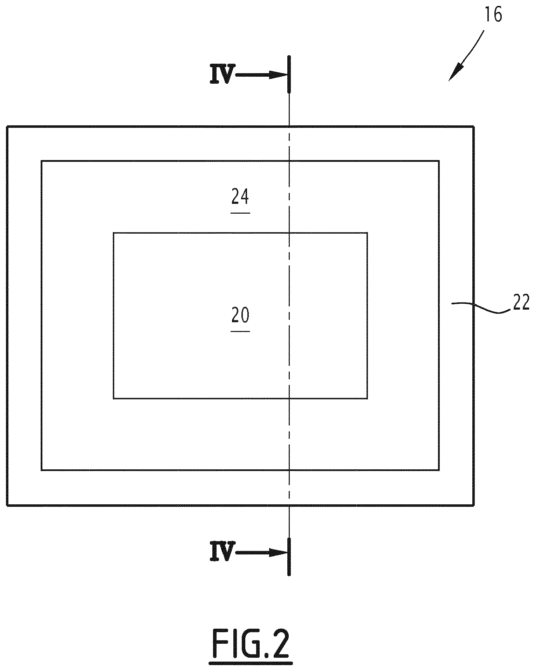

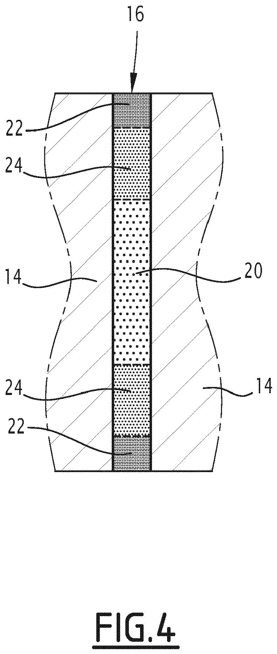

Le panneau séparateur 16 est illustré seul sur la figure 2. Ce panneau est formé d'une structure lattice continue sur toute la surface du panneau. Une structure lattice est une structure en treillis délimitant une pluralité de passages interconnectés de circulation du fluide caloporteur. Un exemple de structure lattice est illustré sur la figure 4.

Le panneau séparateur 16 comporte plusieurs plages de compressibilités différentes résultant de la structure du matériau utilisé. Dans l'exemple considéré, ces plages sont concentriques.

En particulier, le panneau 16 présente une plage centrale 20 de compressibilité élevée et un cadre périphérique extérieur 22 de compressibilité basse. Entre les plages 22 et 24 est délimitée une plage intermédiaire 24 de compressibilité moyenne.

La plage centrale de compressibilité élevée 20 a par exemple une forme rectangulaire. Elle est centrée sur le centre du panneau séparateur 22 et couvre environ 25% de sa surface. Le cadre périphérique 22 a une compressibilité basse et cette plage s'étend sur une largeur comprise entre 5 et 15 mm, de préférence 10 mm, depuis le bord périphérique du panneau 16.

Pour un panneau qui au repos, en dehors de toute précontrainte a une épaisseur L0, la variation d'épaisseur s'exprime en pourcentage sous la forme L/Lₒ où L est la réduction d'épaisseur, l'épaisseur actuelle étant L0-L.

La précontrainte au montage conduit à une variation d'épaisseur noté Ci qui est identique pour toutes les plages du panneau, ce dernier ayant une même épaisseur L0 dans toutes les plages en dehors de toute contrainte.

Au sens de l'invention, la compressibilité s'entend après montage sous précontrainte initiale du panneau entre les deux éléments de batterie.

Ainsi, toutes les différences ou ratio de compressibilité s'entendent pour une variation d'épaisseur L/L0 supérieure à Cᵢ.

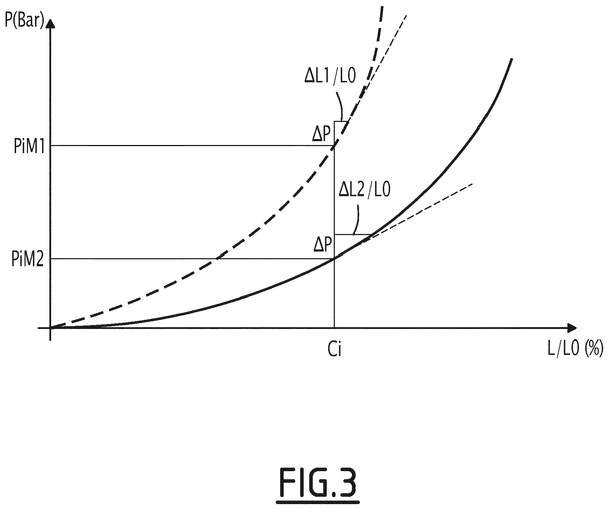

Sur la figure 3 sont représentées les courbes exprimant la compressibilité de deux plages du panneau, c'est-à-dire la relation entre la contrainte P en ordonnée et la variation d'épaisseur L/Lo en abscisse.

La courbe en trait continu représente les caractéristiques d'une plage plus compressible, par exemple la plage 20 et la courbe en trait pointillé représente les caractéristiques d'une plage moins compressible par exemple la plage 22.

Sur cette figure est illustrée la variation d'épaisseur Ci correspondant à la précontrainte initiale. Seule la partie des courbes pour L/Lo > Ci est à considérer.

La précontrainte initiale Ci du fait des différences de compressibilité conduit à des pressions PiM1 et PiM2 différentes sur les deux plages de compressibilité.

PiM1 appliquée sur la zone de compressibilité plus faible est supérieure à PᵢM2 appliquée sur la zone de compressibilité plus forte.

On voit sur cette figure 3 que pour une variation de pression ΔP identique, les variations d'épaisseur sont très différentes, et ΔL1/L0 pour la plage de compressibilité la plus faible est très inférieure à ΔL2/L0 pour la plage de compressibilité la plus forte.

Le rapport de la compressibilité de la plage la plus compressible dans l'exemple considéré la plage centrale 20, et de la compressibilité de la plage la moins compressible, le cadre périphérique 20 du panneau séparateur dans l'exemple considéré, est compris entre 5 et 20 et est de préférence sensiblement égal à 10.

Autrement dit, pour l'application d'une même pression sur la plage centrale 20 et sur la plage périphérique 22, la variation d'épaisseur de la plage centrale 20 est 5 à 20 En variante, le matériau constituant la structure lattice est une matière plastique tel que de l'ABS.

Chaque motif 102 remplissant un carré est un octaèdre régulier dont les six sommets s'inscrivent au centre des faces du carré le contenant.

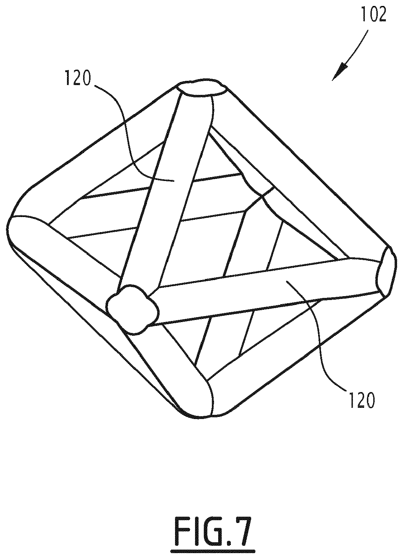

Un octaèdre 102 est illustré à plus grande échelle sur la figure 7.

L'octaèdre est formé d'un ensemble de pontets 120 s'étendant suivant ses arêtes et reliant les sommets voisins pour délimiter des triangles formant les faces de l'octaèdre. Ainsi, les octaèdres adjacents sont reliés l'un à l'autre par deux sommets contigus.

Suivant un premier mode de réalisation, et suivant les plages du panneau 16, la section des pontets 120 délimitant l'octaèdre est plus ou moins importante. La compressibilité de la plage formée des octaèdres est d'autant plus importante que la section des pontets les constituant est faible.

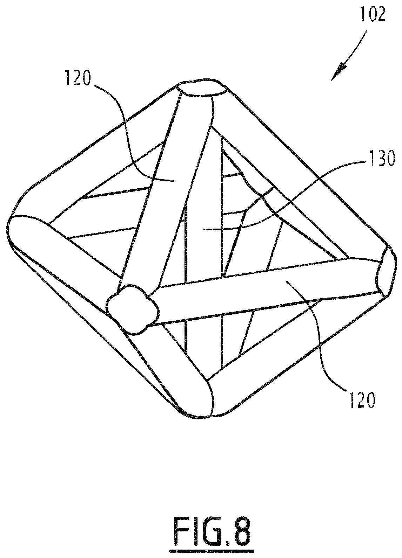

Suivant un autre mode de réalisation, les octaèdres présentent un nombre de pontets différent suivant l'élasticité souhaitée pour la plage considérée. Ainsi, et comme illustré sur la figure 8, les octaèdres dans les plages de faible compressibilité comportent un pontet supplémentaire 130 s'étendant suivant une diagonale et reliant ensemble deux sommets opposés.

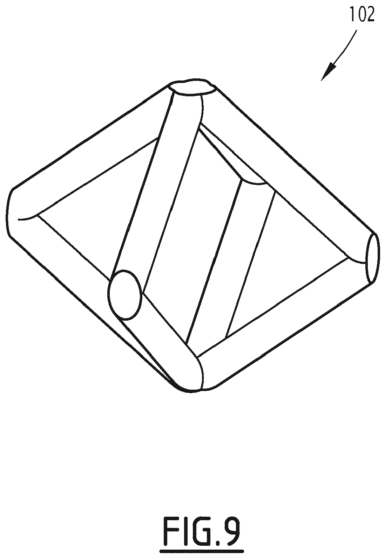

À l'inverse, et comme illustré sur la figure 9, les octaèdres présents dans une plage de forte compressibilité sont dépourvus de pontet suivant une couronne périphérique reliant les quatre sommets disposés dans un même plan.

Les octaèdres dans la plage de compressibilité médiane sont tels que sur la figure 7 et comportent 12 pontets suivant les arêtes.

Pour obtenir des gradients de compressibilité, une combinaison des octaèdres des figures 7, 8 et 9 est effectuée, la compressibilité étant d'autant plus importante que la proportion d'octaèdres du type de la figure 9 sont nombreux, la compressibilité étant autant plus forte que la densité en octaèdres de la figure 8 est plus forte.

On conçoit qu'avec une paroi de compressibilité plus forte dans la partie centrale que sur sa périphérie. La déformation des éléments de batterie adjacentes est rendue possible tout en permettant un maintien satisfaisant des éléments de batterie entre eux, puisque le panneau est relativement rigide à sa périphérie, zone où les éléments de batterie doivent être maintenues.

En outre, le panneau contribue lui-même à assurer une bonne évacuation thermique puisque la chaleur produite par les éléments de batterie se propage au travers de la structure lattice qui joue alors un rôle d'échangeur thermique avec le liquide caloporteur.

## Revendications

1. Batterie (10) comportant une cuve (12) de circulation d'un fluide caloporteur et disposés dans la cuve (12) :
- des éléments de batterie (14) ;
- un panneau séparateur (16) interposé entre les éléments de batterie, le panneau séparateur (16) étant formé d'une structure en treillis délimitant une pluralité de passages interconnectés de circulation du fluide caloporteur,
**caractérisée en ce que** chaque panneau séparateur (16) comporte des plages (20, 22, 24) de compressibilités différentes.

2. Batterie selon la revendication 1, dans laquelle la compressibilité au centre (20) du panneau séparateur (16) est supérieure à la compressibilité en périphérie (22) du panneau séparateur (16).

3. Batterie selon la revendication 2, dans laquelle le panneau séparateur (16) présente un cadre périphérique (22) entourant une plage centrale (20), la compressibilité dans la plage centrale (20) étant supérieure à la compressibilité dans le cadre périphérique (22).

4. Batterie selon la revendication 2, dans laquelle la compressibilité du panneau séparateur (16) évolue suivant un gradient sensiblement continu du centre (20) du panneau séparateur (16) vers sa périphérie (22).

5. Batterie selon l'une quelconque des revendications 2 à 4, dans laquelle le rapport de compressibilité entre le centre du panneau séparateur (16) et la périphérie du panneau séparateur (16) est compris entre 5 et 20.

6. Batterie selon l'une quelconque des revendications 2 à 5, dans laquelle le panneau séparateur (16) est formé de motifs élémentaires répétés de manière périodique, chaque motif comportant un ensemble de pontets interconnectés (120), les motifs présents au centre (20) du panneau séparateur (16) ayant un nombre de pontets inférieur aux motifs présents à la périphérie (22) du panneau séparateur (16).

7. Batterie selon l'une quelconque des revendications 2 à 6, dans laquelle le panneau séparateur (16) est formé de motifs élémentaires répétés de manière périodique, chaque motif comportant un ensemble de pontets interconnectés (120), les sections de pontets des motifs présents au centre (20) du panneau séparateur (16) ayant une section supérieure à celle des pontets des motifs présents à la périphérie (22) du panneau séparateur (16).

8. Batterie selon l'une quelconque des revendications précédentes, dans laquelle le panneau séparateur (16) est maintenu comprimé entre deux éléments de batterie sous une pression d'au moins 0,1 bar.

9. Batterie selon l'une quelconque des revendications précédentes, dans laquelle le panneau séparateur (16) est métallique.
